# EUROPÄISCHE PATENTSCHRIFT

(11) **EP 1 819 437 B1**
(45) Veröffentlichungstag und Bekanntmachung des Hinweises auf die Patenterteilung: **15.11.2017**
(21) Anmeldenummer: 05790966.5
(22) Anmeldetag: 05.09.2005
(51) Int. Cl.: B01J 20/28, B01J 20/32, B01D 39/16, B01D 39/20, A62D 5/00

(54) **SORPTIVER TEXTILVERBUND**
SORPTIVE TEXTILE COMPOSITE
COMPOSITE TEXTILE SORPTIF

(30) Priorität: 18.10.2004 DE 102004050862; 09.11.2004 DE 102004054260
(43) Veröffentlichungstag der Anmeldung: 22.08.2007
(73) Patentinhaber: Bräuer, Horst, 46419 Isselburg (DE)
(72) Erfinder: Bräuer, Horst, 46419 Isselburg (DE)
(74) Vertreter: Holland, Ralf
(86) Internationale Anmeldenummer: PCT/DE2005/001546
(87) Internationale Veröffentlichungsnummer: WO 2006/042489

(56) Entgegenhaltungen:
- DE-A1- 19 519 869
- DE-A1- 19 829 975
- DE-B3- 10 249 998
- US-A- 4 904 343
- US-A- 5 605 746

## Beschreibung

Die Erfindung betrifft einen sorptiven Textilverbund, aufweisend einen luftdurchlässigen Träger von Adsorberpartikeln, der wenigstens einseitig mit einer luftdurchlässigen, eine Kleberschicht aufweisenden Kaschierung versehen ist.

Textile und damit flexible Flächenfilter finden vielfältig Verwendung. Sei es im Flugzeugbau, dem Kraftfahrzeugbau, bei medizinischen Apparaturen oder insbesondere Klimaanlagen, textile Flächenfilter verhindern den Durchgang giftiger oder schädlicher Dämpfe und Gase.

Ein weiteres Anwendungsbeispiel ist die Verwendung von textilen Flächenfilter für ABC-Schutzausrüstungen, insbesondere ABC-Schutzanzüge, die in der Regel mit Adsorberpartikeln für die Adsorption von chemischen Giften versehen sind.

Auch wenn vielfältige Ausführungsbeispiele von sorptiven Textilverbünden bekannt geworden sind, ist der Struktur nach der Aufbau im wesentlichen gleich. In bzw. auf ein textiles Gewirke und/oder Gestrick werden mittels eines Klebers Adsorberpartikel verhaftet und zur Vermeidung eines Verlustes von Adsorberpartikel wird die Einbringseite noch mit einer eine Kleberschicht aufweisenden Kaschierung versehen.

Aus der US 4,904,343 A ist ein luft- und wasserdampfdurchlässiges Vliesstoffmaterial und seine Herstellung bekannt, dass toxische Dämpfe absorbieren kann. Bei der Herstellung eines solchen Vliesstoffmaterial wird eine wässrige Lösung aus Acrylfasern und Aktivkohlebestandteilen blattartig ausgelegt und unter Druck und erhöhter Temperatur getrocknet. Dabei können die Aktivkohlebestandteile Aktivkohlefasern, Aktivkohlepartikel und Mischungen von Aktivkohle Faser und Aktivkohlepartikel sein. Ein so erhaltenes blattartiges Material kann weiter mit einem Vlies noch belegt werden, indem bspw. mit einem Acrylschaumkleber ein Baumwollvlies aufgebracht wird.

Um die Luftdurchlässigkeit derartiger textiler Filter durch den Kleberauftrag nicht in unzulässiger Weise einzuschränken, wird regelmäßig die Trägeroberfläche nur teilweise mit einem Klebstoff bedeckt, beispielsweise gemäß DE 40 34 798 ein reaktiver, vernetzungsfähiger Kleber auf Polyurethanbasis, der als Schmelzkleber vor dem Aufbringen auf den Träger aufgeschmolzen wird, wobei nach dem Aufbringen der Adsorberpartikel an dem Träger eine Abkühlung erfolgt, bei welcher der Kleber durch die Wirkung von Luftfeuchtigkeit und/oder von Feuchtigkeit des Trägers vernetzt.

Aus der DE 82 08 751 ist ein textiler Flächenfilter bekannt, bei dem ein ein pulverförmiger Adsorberpartikel und ein polymeres Bindemittel enthaltenes Gemisch in einem bestimmten Muster auf einen Träger, beispielsweise ein Baumwollgewebe, aufgedruckt wird, wobei der Druck bis zu 90 % der Oberfläche der Trägerschicht überdeckt.

Die Fixierung von Adsorberpartikeln an einer Oberseite eines textilen Trägers mittels eines Klebers ist allerdings aus mehreren Gründen unbefriedigend. Zunächst wird durch den die Adsorberpartikel an dem Träger verhaftenden Kleber ein großer Teil der freien Oberfläche der Adsorberpartikel zugesetzt, so dass diese Oberflächen für eine Adsorption von schädlichen Gasen oder Dämpfen nicht mehr zur Verfügung stehen. Dieser Verlust kann mehr als 25% betragen. Darüber hinaus werden durch Klebstoffe die elastischen Eigenschaften eines textilen Trägers beeinträchtigt und können Adsorberpartikel bei Faltungen des Gewebes aus dem Klebeverbund ausbrechen und verloren gehen, womit auch diese Partikel nicht mehr für eine Adsorption zur Verfügung stehen. Darüber hinaus ist die Tiefe der aktiven Adsorption bei einem derartigen Auftrag der Adsorptionspartikel regelmäßig gering, da keine echte räumliche Filtermatrix aufgebaut wird.

Eine solche räumliche Filtermatrix kann mit einem Träger aus einem Schaumkunststoff erreicht werden, der die Adsorberpartikel in seiner Struktur aufnimmt. Hierzu wird beispielsweise gemäß DE 44 10 920 ein Schaumkunststoff mit einer Paste imprägniert, in der Adsorberpartikel enthalten sind, deren Bindemittel trocknet und bei höherer Temperatur vernetzt, wobei zuerst nur die Paste getrocknet wird und dann der Schaumkunststoff komprimiert und mit der Trägerschicht verbunden wird, wobei während der Kompression des Schaumkunststoffes und dem Verbinden mit einem textilen Träger eine Aufheizung der Paste wenigstens auf deren Vernetzungstemperatur während einer zur Fixierung des Schaumkunststoffs mittels der Paste ausreichenden Zeit erfolgt.

Auch bei derartigen Verfahren stellt sich das Problem, dass durch ein Klebstoff die freie Oberfläche der Adsorberpartikel verkleinert wird, die damit einer aktiven Adsorption verloren geht.

Bei den bekannten Verfahren der Herstellung sorptiver Textilverbünde muss weiter als nachteilig angesehen werden, dass regelmäßig eine Vielzahl von Arbeitsschritten erforderlich sind. Hierzu ist ein textiler Verbund regelmäßig auch umzusetzen, wodurch aufgebrachte Adsorberpartikel aus dem Klebeverbund ausbrechen können und verloren gehen können.

Hieraus kann eine Ungleichmäßigkeit der Aktivität der Gesamtfläche eines textilen Filters resultieren, was seine Leistungsfähigkeit stark mindert.

Vor diesem technischen Hintergrund macht die Erfindung es sich zur Aufgabe, einen sorptiven Textilverbund der eingangs genannten Art zu schaffen, dessen Herstellung unproblematisch ist und der neben einer hohen Filterleistung auch eine hohe Luftdurchlässigkeit aufweist.

Gelöst wird diese technische Problematik bei einem sorptiven Textilverbund, aufweisend einen luftdurchlässigen Träger von Adsorberpartikeln, der wenigstens einseitig mit einer luftdurchlässigen, eine Kleberschicht aufweisenden Kaschierung versehen ist, durch die kennzeichnenden Merkmale des Anspruchs 1.

Der erfindungsgemäße sorptive Textilverbund weist eine Reihe von Vorteilen gegenüber den herkömmlichen auf.

Durch den Verzicht auf einen die Adsorberpartikel an den Träger anbindenden Kleber wird sichergestellt, dass die Adsorberpartikel in vollem Umfang aktiv bleiben. Eine erhöhte Filterleistung ist somit möglich bzw. eine Verminderung der Menge der vergleichsweise teueren Adsorberpartikel.

Als Träger der Adsorberpartikel wird ein Faservlies verwendet, dessen vorzugsweise synthetischen Fasern ohne vorherige Garnbildung durch Zusammenbringen, Verwirren, einen vergleichsweise losen Flächenverbund ausbilden. In diesen Flächenverbund werden bspw. durch Streuen die Adsorberpartikel eingebracht und, ohne jeden weiteren Klebstoff, allein von den Fasern gehalten. Bevorzugt auf der Einbringseite der Adsorberpartikel erfolgt danach eine Kaschierung mit einem luftdurchlässigen Vlies, so dass auch bei einer Lageänderung die Adsorberpartikel nicht mehr aus dem Faservlies austreten können und zum anderen das Faservlies ausreichende Festigkeit erhalt.

Als Fasermaterialien können neben Fasern aus Polyamid und Polyester, aus PA und PES, auch andere synthetische und/oder zellulosische Fasern oder Fasermischungen Verwendung finden.

Bei dem sorptiven Textilverbundes nach der Erfindung wird als Faservlies ein Faserpolvlies verwendet. Bei einem solchen Faserpolvlies ist ein Fadensystem derart eingearbeitet, dass Einzelfäden in bestimmten Abständen senkrecht auf der Erstreckungsfläche des Faserpolvlieses stehen. Dadurch kann zumindest die Einbringseite mit Noppen oder Schlingen, geschlossen oder aufgeschnitten, versehen sein, durch die zum einen das Faservlies mechanisch verstärkt und verfestigt wird und zum anderen eine Oberfläche auf der Einbringseite ausgebildet ist, in die Adsorberpartikel leicht eindringen können und andererseits, bei der Ausbildung von geschlossenen Schlingen kaum wieder austreten können.

Durch ein Flächengewicht zwischen 90 g/m² und 120 g/m² wird ein voluminöser, textiler und vorzugsweise vollsynthetischer Träger ausgebildet, der dennoch eine hohe Luftdurchlässigkeit aufweist.

Für die Kaschierung des Trägers mit dem Vlies findet ein geeigneter, insbesondere mittelviskoser Kleber Verwendung, der die Flexibilität des sorptiven Verbundes nach der Erfindung nicht beeinflusst. Um die Luftdurchlässigkeit des Verbundes möglichst wenig durch die Kleberschicht zu beeinflussen, wird der Kleber vorzugsweise in Punkten aufgebracht. Insbesondere schmale, streifen- oder gitterartige Klebermuster sind gleichwohl möglich.

Auch das kaschierende Vlies ist vorzugsweise synthetisch, insbesondere aus einer Mischung von Fasern aus Polyamid und Polyester ausgebildet. Gegenüber dem voluminösen Träger ist allerdings das Vlies lediglich von einem Flächengewicht zwischen 20 g/m² und 40 g/m².

Der Verwendungszweck des sorptiven Textilverbundes nach der Erfindung wird die Größe und das Material der Adsorberpartikel im wesentlichen bestimmen. Die Größe kann zwischen mehreren Mikrometern bishin in den Millimeterbereich variieren, wobei durch die Ausbildung von geschlossenen Schlingen auch größere Partikel, beispielsweise von 0,3 mm bis 1 mm, gehalten werden und damit unproblematisch Verwendung finden können.

Als adsorbierende Materialien können Kieselsäurexerogele, Metalloxide und -hydroxide, insbesondere Aluminiumoxid und -hydroxid, Molekularsiebe, Ionenaustauscher und insbesondere Aktivkohlen Verwendung finden. Bevorzugt werden dabei Aktivkohlen, insbesondere Kugelaktivkohle, deren Herstellung beispielsweise in der DE 199 30 732 offenbart ist, und deren Eigenschaften bei der Herstellung gleichsam einstellbar sind. Bevorzug ist dabei eine Kugelaktivkohle, die eine Vielzahl von Mikroporen und einen erhöhten Härtegrad aufweist.

In weiterer konstruktiver Ausgestaltung kann vorgesehen sein, dass zwischen dem Faserpolvlies und dem Vlies eine Gitterstruktur, bspw. ein Gittergewebe, angeordnet ist. Durch eine solche Gitterstruktur wird die Querfestigkeit des Textilverbundes erheblich verbessert. Insbesondere dann, wenn das Material für die Gitterstruktur eine Chemiefaser wie ein PES ist.

Es soll diese Gitterstruktur lediglich die Quersteifigkeit des Textilverbundes erhöhen, es ist nicht daran gedacht, dass durch diese Gitterstruktur die Kugelaktivkohle gehalten wird. Von daher ist bevorzugt, dass die Maschenweite der Gitterstruktur größer als die Abmessungen der Kugelaktivkohle ist. Bevorzugt wird eine Maschenweite der Gitterstruktur deshalb zwischen 3 mm und 8 mm.

Neben dem eingangs erläuterten sorptiven Textilverbund werden auch für Verfahren für die Herstellung eines Textilverbundes, insbesondere mit einem oder mehreren der vorangehend erläuterten Merkmale, gem. der Ansprüche 12 und 13 Schutz begehrt.

Das Herstellverfahren weist dem Grunde nach lediglich zwei Arbeitsschritte noch auf, die unmittelbar aufeinander abfolgen, so dass ein Umsetzen des mit Adsorberpartikeln versehenen Trägers entfällt. Ein Verlust an Adsorberpartikeln ist nicht zu befürchten. Vielmehr werden diese allein durch die Fasern des Faservlieses lose gehalten.

Dabei kann die Menge der Adsorberpartikel um 25 % gegenüber der Menge herkömmlicher, jedoch verklebter Adsorberpartikeln reduziert sein, womit der Textilverbund nach der Erfindung leichter und kostengünstiger bei gleicher Adsorberleistung hergestellt werden kann.

Ist für die Erhöhung der Quersteifigkeit des Textilverbundes eine Gitterstruktur vorgesehen, werden in einem ersten Verfahrensschritt in ein Faservlies Adsorberpartikel eingebracht, in einem zweiten Verfahrensschritt wird das Faservlies mit einer Gitterstruktur überdeckt und in einem unmittelbar nachfolgenden dritten Verfahrensschritt wird die Einbringseite mit den von den Fasern des Faservlieses lose gehaltenen Adsorberpartikeln mit einem Vlies unter Einfassen der Gitterstruktur kaschiert.

## Patentansprüche

1. Sorptiver Textilverbund, aufweisend einen luftdurchlässigen Träger von Adsorberpartikeln, der wenigstens einseitig mit einer luftdurchlässigen, eine Kleberschicht aufweisenden Kaschierung versehen ist, **dadurch gekennzeichnet, dass** der Träger ein Faservlies ist, das das Faservlies ein Faserpolvlies mit einer einseitigen Faserpolbildung ist, dass die Faserpole des Faserpolvlieses als geschlossene Schlingen ausgebildet sind, dass auf der Seite des Faservlieses, auf der die Pole als Schlingen ausgebildet sind, lose Adsorberpartikel eingebracht sind und dass das Faservlies auf der Einbringseite der Adsorberpartikel mit einem luftdurchlässigen Vlies kaschiert ist.

2. Textilverbund nach einem oder mehreren der vorangehenden Ansprüche, **dadurch gekennzeichnet, dass** das Flächengewicht des Faserpolvlieses zwischen 90 g/m² und 120 g/m² beträgt.

3. Textilverbund nach einem oder mehreren der vorangehenden Ansprüche, **dadurch gekennzeichnet, dass** die Kleberschicht des Vlieses punktförmig ausgebildet ist.

4. Textilverbund nach einem oder mehreren der vorangehenden Ansprüche, **dadurch gekennzeichnet, dass** das Vlies durch eine Mischung von Fasern aus Polyamid und Polyester ausgebildet wird.

5. Textilverbund nach einem oder mehreren der vorangehenden Ansprüche, **dadurch gekennzeichnet, dass** das Flächengewicht des Vlieses zwischen 20 g/m² und 40 g/m² beträgt.

6. Textilverbund nach einem oder mehreren der vorangehenden Ansprüche, **dadurch gekennzeichnet, dass** die Adsorberpartikel durch eine Kugelaktivkohle ausgebildet werden.

7. Textilverbund nach Anspruch 6, **dadurch gekennzeichnet, dass** die Abmessungen der Kugelaktivkohle zwischen 0,3 mm und 1,0 mm, liegen.

8. Textilverbund nach einem oder mehreren der vorangehenden Ansprüche, **dadurch gekennzeichnet, dass** zwischen dem Faserpolvlies und dem luftdurchlässigen Vlies eine Gitterstruktur vorgesehen ist.

9. Textilverbund nach Anspruch 8, **dadurch gekennzeichnet, dass** die Gitterstruktur aus einer Chemiefaser ist.

10. Textilverbund nach Anspruch 8 oder 9, **dadurch gekennzeichnet, dass** die Maschenweite der Gitterstruktur größer als die Abmessungen der Kugelaktivkohle ist.

11. Textilverbund nach einem der Ansprüche 8 bis 10, **dadurch gekennzeichnet, dass** die Maschenweite der Gitterstruktur zwischen 3 mm und 8 mm beträgt.

12. Verfahren für die Herstellung eines sorptiven Textilverbundes, aufweisend einen luftdurchlässigen Träger von Adsorberpartikeln, der einseitig mit einer luftdurchlässigen, eine Kleberschicht aufweisenden Kaschierung versehen ist, **dadurch gekennzeichnet, dass** der Träger ein Faservlies ist, dass das Fasevlies ein Faserpolvlies mit einer einseitigen Faserpolbildung ist, dass die Faserpole des Faserpolvlieses als geschlossene Schlingen ausgebildet sind, dass nach einem ersten Verfahrensschritt, in dem auf der Seite des Faservlieses, auf der die Pole als Schlingen ausgebildet sind, Adsorberpartikel lose eingebracht werden, in einem unmittelbar nachfolgenden, zweiten Verfahrensschritt die Einbringseite mit den von den Fasern des Faservlieses lose gehaltenen Adsorberpartikeln mit einem Vlies kaschiert wird.

13. Verfahren für die Herstellung eines sorptiven Textilverbundes, aufweisend einen luftdurchlässigen Träger von Adsorberpartikeln, der einseitig mit einer luftdurchlässigen, eine Kleberschicht aufweisenden Kaschierung versehen ist, **dadurch gekennzeichnet, dass** der Träger ein Faservlies ist, dass das Fasevlies ein Faserpolvlies mit einer einseitigen Faserpolbildung ist, dass die Faserpole des Faserpolvlieses als geschlossene Schlingen ausgebildet sind, dass nach einem ersten Verfahrensschritt, in dem auf der Seite des Faservlieses, auf der die Pole als Schlingen ausgebildet sind, Adsorberpartikel lose eingebracht werden, in einem zweiten Verfahrensschritt das Faservlies mit einer Gitterstruktur überdeckt wird und in einem unmittelbar nachfolgenden, dritten Verfahrensschritt die Einbringseite mit den von den Fasern des Faservlieses lose gehaltenen Adsorberpartikeln mit einem Vlies unter Einfassen der Giterstruktur kaschiert wird.

## Claims

1. An adsorptive textile composite comprising an air-permeable carrier for adsorber particles, which is provided on at least one side with an air-permeable lining having an adhesive layer, **characterized in that** the carrier is a nonwoven fabric, **in that** the nonwoven fabric is a fibre pile fleece with a fibre pile formation on one side, **in that** the fibre pile of the fibre pile fleece is formed as closed loops, **in that** on the side of the nonwoven fabric on which the pile is formed as loops, loose adsorber particles are introduced, and **in that** on the side on which the adsorber particles have been introduced, the nonwoven fabric is lined with an air-permeable fleece.

2. The textile composite as claimed in one or more of the preceding claims, **characterized in that** the surface weight of the fibre pile fleece is between 90 g/m² and 120 g/m².

3. The textile composite as claimed in one or more of the preceding claims, **characterized in that** the adhesive layer of the fleece is applied in the form of dots.

4. The textile composite as claimed in one or more of the preceding claims, **characterized in that** the fleece is formed by a mixture of polyamide and polyester fibres.

5. The textile composite as claimed in one or more of the preceding claims, **characterized in that** the surface weight of the fleece is between 20 g/m² and 40 g/m².

6. The textile composite as claimed in one or more of the preceding claims, **characterized in that** the adsorber particles are formed by active carbon spheres.

7. The textile composite as claimed in claim 6, **characterized in that** the dimensions of the active carbon spheres are between 0.3 mm and 1.0 mm.

8. The textile composite as claimed in one or more of the preceding claims, **characterized in that** a mesh structure is provided between the fibre pile fleece and the air-permeable nonwoven.

9. The textile composite as claimed in claim 8, **characterized in that** the mesh structure is formed from a chemical fibre.

10. The textile composite as claimed in claim 8 or claim 9, **characterized in that** the mesh width of the mesh structure is larger than the dimensions of the active carbon spheres.

11. The textile composite as claimed in one of claims 8 to 10, **characterized in that** the mesh width of the mesh structure is between 3 mm and 8 mm.

12. A process for the production of an adsorptive textile composite comprising an air-permeable carrier for adsorber particles, which is provided on one side with an air-permeable lining having an adhesive layer, **characterized in that** the carrier is a nonwoven fabric, **in that** the nonwoven fabric is a fibre pile fleece with a fibre pile formation on one side, **in that** the fibre pile of the fibre pile fleece is formed as closed loops, **in that** after a first step of the process in which adsorber particles are loosely introduced onto the side of the nonwoven fabric on which the pile is formed as loops, in an immediately following second step, the incoming side where the adsorber particles are being loosely retained by the fibres of the nonwoven fabric is lined with a fleece.

13. A process for the production of an adsorptive textile composite comprising an air-permeable carrier for adsorber particles, which is provided on one side with an air-permeable lining having an adhesive layer, **characterized in that** the carrier is a nonwoven fabric, **in that** the nonwoven fabric is a fibre pile fleece with a fibre pile formation on one side, **in that** the fibre pile of the fibre pile fleece is formed as closed loops, **in that** after a first step of the process in which adsorber particles are loosely introduced onto the side of the nonwoven fabric on which the pile is formed as loops, in a second step of the process, the nonwoven fabric is covered with a mesh structure and in a third, immediately following step, the incoming side where the adsorber particles are being loosely retained by the fibres of the nonwoven fabric is lined with a fleece to bind in the mesh structure.

## Revendications

1. Elément composite textile absorbant, comportant un support pour particules absorbantes lequel est perméable à l'air et lequel est pourvu, sur au moins une de ces faces, d'un contrecollage perméable à l'air comportant une couche d'adhésif, **caractérisé en ce que** ledit support est un non-tissé fibreux, que ledit non-tissé fibreux est un non-tissé à groupements de fibres, les groupements de fibres étant formés sur l'une de ses faces, que les groupements de fibres du non-tissé à groupements de fibres sont réalisés sous forme de boucles fermées, que l'on introduit des particules absorbantes non-fixées par la face du non-tissé fibreux sur laquelle lesdits groupements sont réalisés sous forme de boucles, et que la face du non-tissé fibreux par laquelle les particules absorbantes sont introduites est pourvue d'un contrecollage sous forme d'un non-tissé perméable à l'air.

2. Elément composite textile selon l'une ou plusieurs des revendications précédentes, **caractérisé en ce que** la masse surfacique du non-tissé à groupements de fibres est comprise entre 90 g/m² et 120 g/m².

3. Elément composite textile selon l'une ou plusieurs des revendications précédentes, **caractérisé en ce que** la couche d'adhésif du non-tissé est réalisée sous forme de points.

4. Elément composite textile selon l'une ou plusieurs des revendications précédentes, **caractérisé en ce que** le non-tissé est formé par un mélange de fibres en polyamide et polyester.

5. Elément composite textile selon l'une ou plusieurs des revendications précédentes, **caractérisé en ce que** la masse surfacique du non-tissé est comprise entre 20 g/m² et 40 g/m².

6. Elément composite textile selon l'une ou plusieurs des revendications précédentes, **caractérisé en ce que** les particules absorbantes sont réalisées par un charbon actif sphérique.

7. Elément composite textile selon la revendication 6, **caractérisé en ce que** les dimensions du charbon actif sphérique sont comprises entre 0,3 mm et 1,0 mm.

8. Elément composite textile selon l'une ou plusieurs des revendications précédentes, **caractérisé en ce qu'**un grillage est réalisé entre le non-tissé à groupements de fibres et le non-tissé perméable à l'air.

9. Elément composite textile selon la revendication 8, **caractérisé en ce que** ledit grillage est réalisé en une fibre synthétique.

10. Elément composite textile selon les revendications 8 ou 9, **caractérisé en ce que** la largeur de maillage dudit grillage est supérieure aux dimensions du charbon actif sphérique.

11. Elément composite textile selon l'une des revendications 8 à 10, **caractérisé en ce que** la largeur de maillage dudit grillage est comprise entre 3 mm et 8 mm.

12. Procédé de fabrication d'un élément composite textile absorbant comportant un support pour particules absorbantes lequel est perméable à l'air et lequel est pourvu, sur l'une de ces faces, d'un contrecollage perméable à l'air comportant une couche d'adhésif, **caractérisé en ce que** ledit support est un non-tissé fibreux, que ledit non-tissé fibreux est un non-tissé à groupements de fibres, les groupements de fibres étant formés sur l'une de ses faces, que les groupements de fibres du non-tissé à groupements de fibres sont réalisés sous forme de boucles fermées, que l'on réalise, directement après une première étape de procédé consistant à introduire des particules absorbantes, sans les fixer, par la face du non-tissé fibreux sur laquelle lesdits groupements sont réalisés sous forme de boucles, une deuxième étape de procédé consistant à doter la face d'introduction, qui comporte les particules absorbantes non-fixées mais maintenues en place par les fibres du non-tissé fibreux, d'un contrecollage sous forme d'un non-tissé.

13. Procédé de fabrication d'un élément composite textile absorbant comportant un support pour particules absorbantes lequel est perméable à l'air et lequel est pourvu, sur l'une de ces faces, d'un contrecollage perméable à l'air comportant une couche d'adhésif, **caractérisé en ce que** ledit support est un non-tissé fibreux, que ledit non-tissé fibreux est un non-tissé à groupements de fibres, les groupements de fibres étant formés sur l'une de ses faces, que les groupements de fibres du non-tissé à groupements de fibres sont réalisés sous forme de boucles fermées, que l'on réalise, directement après une première étape de procédé consistant à introduire des particules absorbantes, sans les fixer, par la face du non-tissé fibreux sur laquelle lesdits groupements sont réalisés sous forme de boucles, puis une deuxième étape de procédé consistant à recouvrir le non-tissé fibreux d'un grillage, une troisième étape de procédé consistant à doter la face d'introduction, qui comporte les particules absorbantes non-fixées mais maintenues en place par les fibres du non-tissé fibreux, d'un contrecollage sous forme d'un non-tissé pour ainsi renfermer ledit grillage.
